# EUROPEAN PATENT SPECIFICATION

(11) **EP 2 098 894 B1**
(45) Date of publication and mention of the grant of the patent: **15.04.2015**
(21) Application number: 07860154.9
(22) Date of filing: 26.12.2007
(51) Int. Cl.: G02F 1/139, G03B 33/12, G02B 5/30, G02F 1/13363, G03B 21/14

(54) **PHASE DIFFERENCE-COMPENSTING ELEMENT, VAN LIQUID CRYSTAL DISPLAY ELEMENT, AND LIQUID CRYSTAL PROJECTOR**
PHASENDIFFERENZKOMPENSATIONSELEMENT, VAN-FLÜSSIGKRISTALLANZEIGEELEMENT UND FLÜSSIGKRISTALLPROJEKTOR
ELEMENT DE COMPENSATION DE DIFFERENCE DE PHASE, ELEMENT D'AFFICHAGE A CRISTAUX LIQUIDES ET PROJECTEUR A CRISTAUX LIQUIDES

(30) Priority: 27.12.2006 JP 2006351869
(43) Date of publication of application: 09.09.2009
(73) Proprietor: FUJIFILM Corporation, Minato-ku Tokyo 106-8620 (JP)
(72) Inventor: NAKAGAWA, Kenichi, Tokyo 106-8620 (JP); TAKAHASHI, Hiroki, Tokyo 106-8620 (JP)
(74) Representative: Hoffmann Eitle
(86) International application number: PCT/JP2007/074925
(87) International publication number: WO 2008/078764

(56) References cited:
- EP-A1- 1 662 303
- JP-A- 07 306 406
- JP-A- 2006 189 753
- JP-A- 2006 293 098
- JP-B2- 2 866 372
- US-A- 5 196 953
- US-B1- 6 903 789

## Description

### Technical Field

The present invention relates to a retardation compensation element combined with liquid crystal devices so as to compensate a phase difference of light passing through the liquid crystal device, and more particularly to a retardation compensation element to compensate a phase difference of light passing through a VAN liquid crystal device in which liquid crystal molecules are vertically aligned when no voltage is applied.

### Background Art

A liquid crystal display device (hereinafter, LCD) can be found in a variety of electronic hardware, such as a display of calculators, electronic dictionaries, televisions and digital cameras, a monitor of car navigation system, cellular phones and computers, and a display panel of projectors.

According to the operation modes of a liquid crystal layer, the LCD can be classified into several types, such as TN (Twisted Nematic) LCD, VAN (Vertical Alignment Nematic) LCD, IPS (In-Plane Switching) LCD and OCB (Optically Compensatory Bend) LCD. Based on the purpose of an electronic hardware and the required function, one of these operation modes is selected.

The VAN-LCD, for example, contains nematic liquid crystal molecules between a pair of substrates each of which has a vertical alignment film on the interior surface, and these liquid crystal molecules are aligned substantially vertical to the substrate when no voltage is applied to a liquid crystal layer (hereinafter, voltage-off state). When a pair of polarizing plates is provided in crossed-nicols across the VAN-LCD, and the VAN-LCD is viewed from the front in voltage-off state, black color is displayed with extremely high contrast.

Because of this feature, the liquid crystal projectors that need to display enlarged images with high contrast employ the VAN-LCD. However, while it provides good contrast when viewed from the front, the VAN-LCD, similar to the other operation modes, hardly keeps good display performance when viewed from an oblique angle, and results in lowering the contrast or causing tone reversal to reverse the brightness of neutral colors. These drawbacks are due partly to the obliquely incident light on the liquid crystal layer. This obliquely incident light is then converted by birefringence of the liquid crystal layer into elliptically-polarized light, and passes through an analyzer.

It is therefore proposed to use a retardation, compensation element with an optical axis running vertical to the surface, the element referred to as a C-plate, so as to compensate the phase difference of the light passing obliquely through the liquid crystal layer (see, for example, Japanese Patent Laid-open Publication No. 2004-145268).

If the liquid crystal layer is driven as a densely-arranged pixel array using a micro-electrode structure, a lateral electric field generated when a voltage is applied to the pixels next to the voltage-off pixels produces reverse tilt domains where the liquid crystal molecules for the voltage-off pixels are aligned opposite to an intended direction, and causes poor alignment of the liquid crystal molecules. To prevent the poor alignment and stabilize the operation of the LCD, the liquid crystal molecules have to be tilted previously (hereinafter, pre-tilt) at a predetermined angle. Ideally, for the VAN-LCDs, the liquid crystal molecules in the voltage-off state need be pre-tilted at an angle of 3 to 10 degrees from the normal direction to the substrate.

However, in the VAN-LCD thus configured, the birefringence due to the pre-tilt of the liquid crystal molecules leads the light passing vertically through the liquid crystal layer to have a phase difference, and the contrast of the VAN-LCD is lowered.

It is therefore proposed to use a retardation compensation element with an optical axis parallel to the surface, the element referred to as an A-plate, together with the C-plate so as to prevent the contrast degradation due to the pre-tilt (see, for example, Claire Gu & Pochi Yeh "Extended Jones matrix method. II" Journal of Optical Society of America A/vol. 10 No. 5/May 1993 p966-973).

It is also suggested to layer two or more retardation compensation elements whose optical axis runs oblique to the surface, the element referred to as an O-plate, so as to extend the viewing angle of the TN-LCD at any gray levels. More particularly, the contrast of the TN-LCDs is improved by combining the C-plate or the A-plate with a pair of 0-plates arranged with their fast axes perpendicular to each other (see, for example, United State Patent No. 5,638,197).

When used alone, the C-plate is able to compensate the phase difference of the light obliquely incident on the liquid crystal device. However, the C-plate is not able to compensate the phase difference caused by the birefringence due to the pre-tilt of the liquid crystal molecules.

When the C-plate and the A-plate are to be used together, on the other hand, there are not only few choices in material but there is actually no material to provide a high level of durability and mass productivity. For example, while the A-plate is generally composed of a uniaxially-stretched polymer film or a birefringent retardation plate made by a microfabrication technique, the polymer film is not very durable and the birefringent retardation plate is not suitable for mass production. Further, the combination of the C-plate and the A-plate will be effective only in a narrow viewing angle. If the viewing angle is expanded to a practical range, the amount of the phase difference is increased in the obliquely incident light on the LCD. Accordingly, it is difficult for the C and A-plates combination to improve the contrast of the VAN-LCD while extending the viewing angle.

Still further, when two 0-plates are layered with their fast axes orthogonal to each other, this 0-plate pair is isotropic to the light moving in a normal line direction to the surface, and hardly compensates the phase difference of the light passing vertically through the VAN-LCD. In other words, these O-plates cannot compensate the phase difference due to the pre-tilt of the liquid crystal molecules.

Specifically, in the United State Patent No. 5,638,197 which simply discloses to use a biaxial 0-plate in the TN-LCDs, there is no teaching of how to install the O-plate, such as the angle of the biaxial 0-plate. Accordingly, the disclosure of this patent document may not easily applied to the VAN-LCDs.

In view of the forgoing, a primary object of the present disclosure is to provide a retardation compensation element capable of improving contrast and a viewing angle of the VAN-LCDs by compensating phase difference due to pre-tilt of liquid crystal molecule of VAN-LCDs as well as phase difference of obliquely incident light on a liquid crystal layer of the VAN-LCDs.

Another object of the present disclosure is to provide a VAN liquid crystal display device and a liquid crystal projector having this retardation compensation element to offer improved contrast and an improved viewing angle.

US 6 903 789 B1 provides an optical compensator for liquid crystal displays being particularly applicable to TN (Twisted Nematic) displays.

EP 1 622 303 A1 discloses a liquid crystal display device having an optical compensator suitable for use with liquid crystals of the so-called horizontally aligned (homogeneous) type.

US 5 196 953 discloses the provision of C-plates to liquid crystal cells to improve the viewing angle thereof.

### Summery of the Invention

According to the present invention, there is provided a retardation compensation element combined with a VAN liquid crystal cell as set forth in Claim 1 below.

It is preferred to arrange the retardation compensation element such that the fast axis of the biaxial birefringent medium runs opposite to a tilt direction of the liquid crystal molecules.

It is also preferred to provide the retardation compensation element with an uniaxial birefringent medium which has an optical axis perpendicular to the surface of the VAN liquid crystal cell. This uniaxial birefringent medium is combined with the biaxial birefringent medium, and compensates a phase difference of light passing obliquely through the liquid crystal layer and a phase difference of light passing through the biaxial birefringent medium.

The uniaxial birefringent medium is an alternate stack of high refractive index and low refractive index inorganic layers.

In another preferred embodiment of the present invention, two of the biaxial birefringent media are layered such that their fast axes form an approximately 90-degree angle and that a center line bisecting this 90-degree angle coincides with the orthographic projection of the deposition direction. These two biaxial birefringent media compensate phase differences of light passing obliquely and vertically through the liquid crystal layer.

According to a further embodiment of the present invention, there is provided a liquid crystal display device as set forth in Claim 6 below. The biaxial birefringent medium compensates a phase difference caused by the liquid crystal molecules being tilted to the cell substrate.

According to a further embodiment of the present invention, there is provided a liquid crystal projector as set forth in Claim 7 below. The biaxial birefringent medium of the retardation compensation element compensates a phase difference caused by the liquid crystal molecules being tilted to the cell substrate.

It is preferred, in this liquid crystal projector, to arrange the retardation compensation element such that the fast axis of the biaxial birefringent medium forms an angle of substantially 135 degrees to a tilt direction of the liquid crystal molecules.

In embodiments of the present invention, the biaxial birefringent medium of the retardation compensation element compensates the phase difference due to the pre-tilt of the liquid crystal molecules in the VAN-LCDs as well as the phase difference of the incident light on the liquid crystal layer. Accordingly, the contrast is improved in the VAN-LCDs, and the viewing angle thereof is extended.

### Brief Description of Drawings

For a better understanding of the invention and to show how the same may be carried into effect, reference will now be made, by way of example only, to the accompanying drawings, in which:
Figure 1 is an external perspective view of a projector with a retardation compensation element according to an embodiment of the present invention;
Figure 2 is a block diagram showing an optical structure of the projector;
Figures 3A to 3C are explanatory views showing alignment of liquid crystal molecules and operation of the retardation compensation element;
Figure 4 is a cross-sectional view of a C-plate;
Figure 5 is an explanatory view of an 0-plate;
Figure 6 is an explanatory view of an index ellipsoid representing an optical property of the O-plate;
Figure 7 is an explanatory view showing an arrangement of the 0-plate to a liquid crystal display device;
Figure 8 is a conoscopic figure showing a viewing angle performance of a projector using only a C-plate as the retardation compensation element;
Figure 9 is a conoscopic figure showing a viewing angle performance of a projector with a retardation compensation element embodying an element of the present invention;
Figure 10 is an explanatory view showing a retardation compensation element having two O-plates; and
Figure 11 is an explanatory view showing an arrangement of two 0-plates.

### Detailed Description

### [First Embodiment]

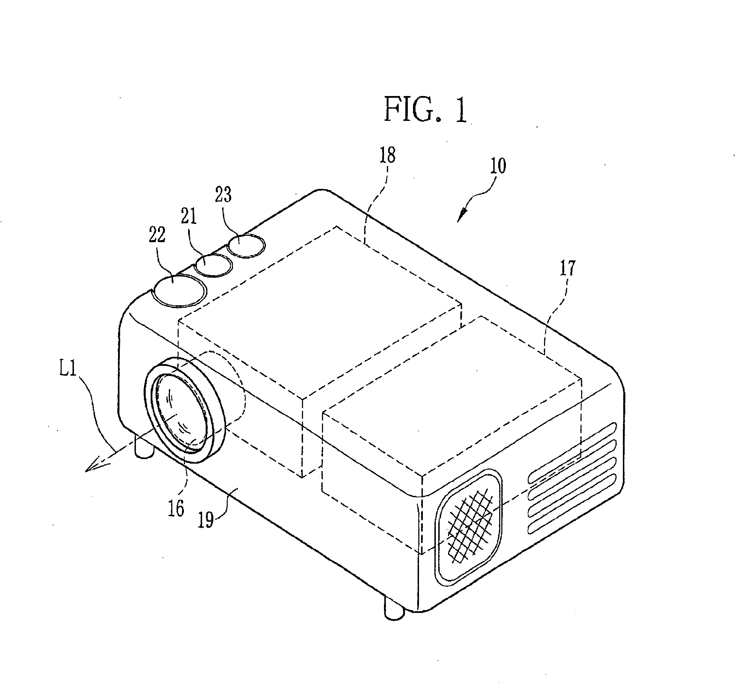

Referring to FIG. 1, a projector 10 that uses a phase difference compensation film according to an embodiment of the present invention includes a projection lens 16, a projector driver 17 and a display optical system 18.

The projector 10 also has a zooming dial 21, a focusing dial 22 and a light amount adjuster dial 23 on a top surface of a housing 19. On a rear surface of the housing 19, one or more connection terminals (not shown) are provided for connection tocomputers and other external devices.

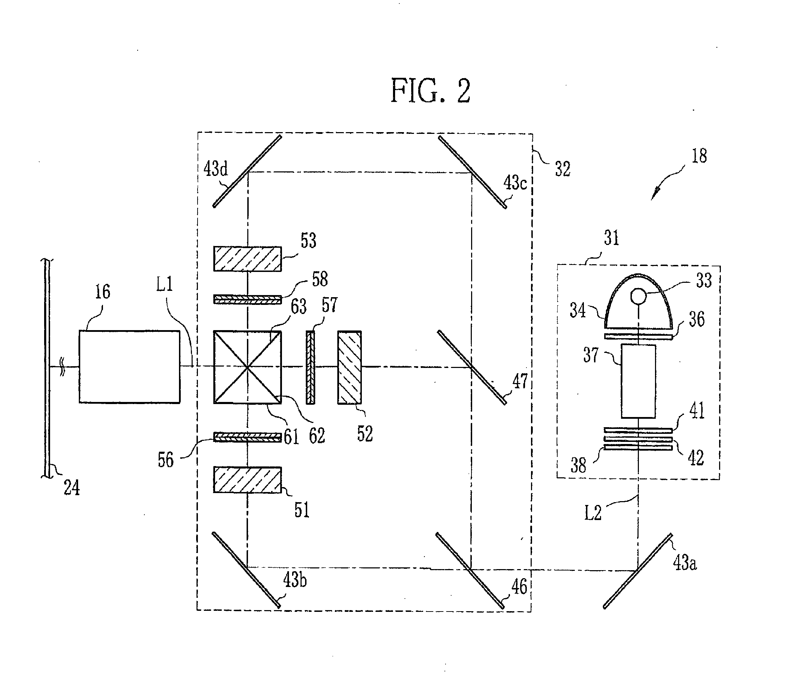

The projection lens 16 enlarges projection light coming from the display optical system 18, and projects it onto a screen 24 (see, FIG. 2). The projection lens 16 is composed of, for example, a zooming lens, a focusing lens and an aperture stop. The zooming lens and the focusing lens are movable along an axis of the projection light (projection light axis) L1. Following the operation of the zooming dial 21, the zooming lens moves to adjust the magnification of a projected image. The focusing lens moves, following the operation of the focusing dial 22 or the movement of the zooming lens, to adjust the focus of a projected image. The aperture stop changes the size of an aperture, in response to the operation of the light amount adjuster dial 23, to adjust the brightness of a projected image.

The projector driver 17 controls each component of the projector 10. For example, the projector driver 17 receives image data from a computer connected to the projector 10, and displays the image on a below mentioned liquid crystal display device.

Additionally, the projector driver 17 includes motors to move the projection lens 16, and separately drives these motors according to the operation on the zooming dial 21, the focusing dial 22 and the light amount adjuster dial 23.

The display optical system 18 divides the light coming from a light source into red, green and blue light, and generates information light of each color by casting the red, green and blue light onto corresponding liquid crystal display devices 51, 52 and 53 (see, FIG. 2) each of which displays an image for red, green or blue color. Then, the display optical system 18 synthesizes the information light into projection light, and projects it onto the screen 24 through the projection lens 16.

As shown in FIG. 2, the display optical system 18 includes a light source 31 and an information-light-generating section 32 to generate information light from the light emitted by the light source 31.

The light source 31 includes a lamp 33, a reflecting mirror 34, an UV-cut filter 36, an integrator 37, a polarizing unit 38, a relay lens 41 and a collimate lens 42.

The lamp 33 is a high-intensity light source, such as a xenon lamp, which radiates natural white light with no specific polarization direction. The white light, radiated from the lamp 33, passes through the UV-cut filter 36 and enters the integrator 37.

The UV-cut filter 36 eliminates an ultraviolet light component from the white light, so that the white light from the lamp 33 does not discolor or deteriorate filters (not shown) made from high molecular weight organic polymer or the like.

The reflecting mirror 34 is, for example, an elliptical mirror, and the lamp 33 is located near a focal point of the elliptical surface. The other focal point of the reflecting mirror 34 lies close to one end of the integrator 37. Owing to this, the white light from the lamp 33 is directed to the integrator 37 efficiently.

Composed of, for example, a glass rod and a micro-lens array attached to the glass rod, the integrator 37 collects the white light out of the lamp 33 and directs it to the collimate lens 42 through the relay lens 41. The amount of light incident on the integrator 37 decreases as the light gets away from an optical axis of the light source (light source optical axis) L2, and is distributed unevenly around the light source optical axis L2. The integrator 37 changes this uneven distribution of light to uniform distribution within a predetermined region around the light source optical axis L2. Accordingly, the brightness of a projected image is substantially uniform across the screen 24.

The collimate lens 42 parallels the light coming from the integrator 37 to the light source optical axis L2. The polarizing unit 38 converts unpolarized light from the collimate lens 42 into a linear beam of light components polarized vertical to the paper surface of this drawing (hereinafter, S polarized light components). The beam of the S polarized light components is then directed by a reflecting mirror 43a to the information-light-generating section 32.

The information-light-generating section 32 includes dichroic mirrors 46, 47, liquid crystal display devices 51, 52, 53, retardation compensation elements 56, 57, 58 and a dichroic prism 61.

The dichroic mirror 46 is arranged to form a 45-degree angle between a normal line to the surface and the optical axis of incident light. The dichroic mirror 46 transmits only red light in the S polarized white light, coming from the light source 31, to a reflecting mirror 43b. The reflecting mirror 43b reflects the red light having passed through the dichroic mirror 46 to the liquid crystal display device 51.

Additionally, the dichroic mirror 46 reflects green and blue light in the S polarized white light to the dichroic mirror 47. The dichroic mirror 47 is arranged to form a 45-degree angle between a normal line to the surface and the optical axis of incident light. The dichroic mirror 47 reflects the green light in the S polarized light, coming from dichroic mirror 46, to the liquid crystal display device 52.

Also, the dichroic mirror 47 transmits the blue light in the S polarized light to a reflecting mirror 43c. The blue light is reflected off the reflecting mirror 43c and then a reflecting mirror 43d, and enters the liquid crystal display device 53.

The liquid crystal display device 51 is a transmissive VAN-LCD. Namely, the liquid crystal display device 51 has a liquid crystal layer in which liquid crystal molecules are aligned vertical to the surface in the voltage-off state. In the liquid crystal display device 51, the voltage across the liquid crystal layer is adjusted on a pixel-by-pixel basis to change the orientation of the liquid crystal molecules. Accordingly, polarization of light passing through the pixels is controlled, and an image is displayed.

Driven by the projector driver 17, the liquid crystal display device 51 displays a grayscale image of red color components of projection image data retrieved from a computer or such. The red light changes, when passing through the liquid crystal display device 51, into red information light that carries the information of the red color components of the projection image.

The liquid crystal display device 52 is also a transmissive VAN-LCD driven by the projector driver 17, and displays a grayscale image of green color components of the projection image data. The green light changes, when passing through the liquid crystal display device 52, into green information light that carries the information of the green color components of the projection image.

The liquid crystal display device 53 is also a transmissive VAN-LCD driven by the projector driver 17, and displays a grayscale image of blue color components of the projection image data. The blue light changes, when passing through the liquid crystal display device 53, into blue information light that carries the information of the blue color components of the projection image.

The retardation compensation element 56 compensates the phase difference of the red information light proceeding from the liquid crystal display device 51 to the dichroic prism 61. Namely, the retardation compensation element 56 changes the phase of the light that passes obliquely through the liquid crystal display device 51 to the phase not to pass an analyzer. Also, the retardation compensation element 56 compensates the phase difference caused in the light passing vertically through the liquid crystal display device 51 by the birefringence due to the pre-tilt of the liquid crystal molecules.

Similarly, the retardation compensation element 57 compensates the phase difference of the green information light proceeding from the liquid crystal display device 52 to the dichroic prism 61, and the retardation compensation element 58 compensates the phase difference of the blue information light proceeding from the liquid crystal display device 53 to the dichroic prism 61.

The dichroic prism 61 is a glass element or a transparent element with the shape of a cube, which contains mutually perpendicular dichroic surfaces 62, 63. The dichroic surface 62 reflects the red light while transmits the green light. The dichroic surface 63 reflects the blue light while transmits the green light.

Therefore, the red, green and blue information light, coming from the liquid crystal display devices 51, 52 and 53 respectively, are synthesized by the dichroic prism 61 into a projection light, which is then directed to the projection lens 16 and projected in full color on the screen 24.

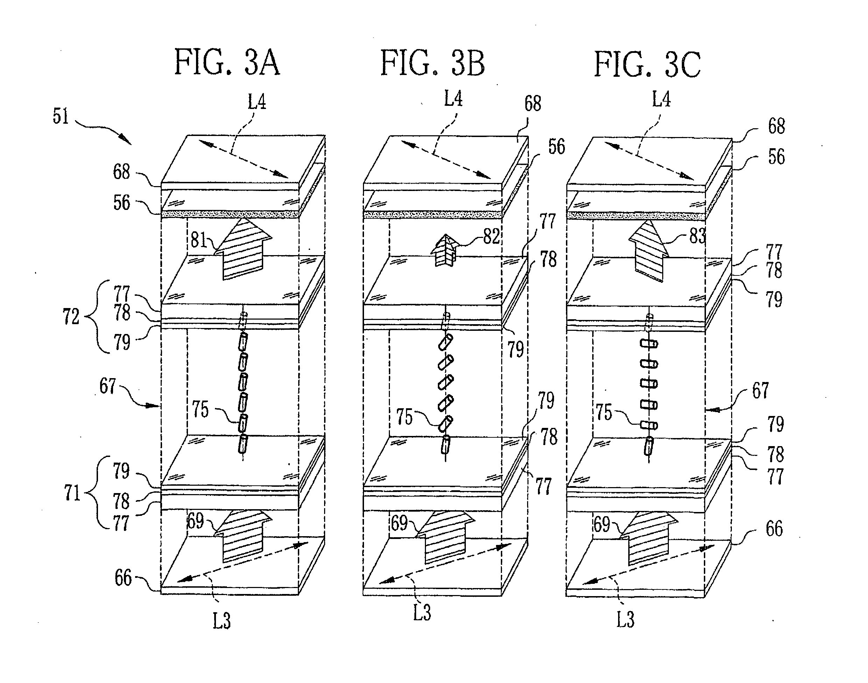

As shown in FIG. 3A, the liquid crystal display device 51 has a polarizer 66, a liquid crystal layer 67 and an analyzer 68 arranged from the light source side, and the retardation compensation element 56 is disposed between the liquid crystal layer 67 and the analyzer 68.

The polarizer 66 has a transmission axis L3 that coincides with the polarization direction of the S polarized light components, and transmits only the polarized light components in the direction of the transmission axis L3 when the red light enters the polarizer 66 from below. In other words, the light going to enter the liquid crystal layer 67 is only an incident light 69 whose electric field oscillates in the direction of the transmission axis L3.

The analyzer 68 transmits only the polarized light components in the direction of a transmission axis L4, indicated by an arrow in FIG. 3, when the light that has been compensated for the phase difference by the retardation compensation element 56 enters the analyzer 68. The analyzer 68 is arranged such that the transmission axis L4 runs perpendicular to the transmission axis L3 of the polarizer 66. Namely, the analyzer 68 and the polarizer 66 are arranged in crossed-nicols. This arrangement leads the liquid crystal display device 51 to function as a, so-called, normally-black transmissive liquid crystal panel which appears black in the voltage-off state.

The liquid crystal layer 67 is composed of transparent substrates 71, 72 and rod-like liquid crystal molecules 75 between these transparent substrates 71, 72.

Each of the transparent substrates 71, 72 is composed of a glass substrate 77, a transparent electrode 78 and an alignment film 79. In the transparent substrate 71, these components are arranged in the order of the glass substrate 77, the transparent electrode 78 and the alignment film 79 from the light source side. In the transparent substrate 72, these components are arranged in the reverse order, that is, the alignment film 79, the transparent electrode 78 and the glass substrate 77 from the light source side.

The transparent electrode 78 is, for example, an indium-tin oxide (ITO) thin film, and formed on the glass substrate 77 by sputtering, electron beam evaporation, or such common method. The transparent electrode 78 is connected to a TFT circuit (not shown) on the transparent substrate 71. This TFT circuit controls the orientation of the liquid crystal molecules 75 by adjusting the voltage between the transparent electrode 78 on the transparent substrate 71 and the transparent electrode 78, which is a common electrode, on the transparent substrate 72.

The alignment film 79 is an oblique deposition film made of such inorganic material as SiO, and has a directionality (hereinafter, alignment direction) determined by the direction of deposition of the material. Liquid crystal molecules between a pair of the alignment films 79 are oriented in the alignment direction of the alignment films 79. These alignment films 79 are arranged such that the alignment direction and the transmission axis L3 of the polarizer 66 meet at a 45-degree angle. The alignment film may possibly be a so-called polyimide film, the film of a high weight molecular polymer with polyimide bonds. However, when compared to this kind of organic alignment film, the oblique deposition inorganic film is more durable, and ensures more stable operation of each component for a long time. It is therefore preferred to use the oblique deposition inorganic film as the alignment film of the VAN-LCD.

The liquid crystal molecules 75 are rod-like molecules with negative dielectric anisotropy, and aligned substantially vertical to the surface of the liquid crystal display device 51 in the voltage-off state. In this state, the liquid crystal molecules 75 have no effect on the phase of the light passing through the liquid crystal layer 67. Namely, in the voltage-off state, the light will pass through the liquid crystal layer 67 without changing the polarization direction.

For example, in FIG. 3A where the liquid crystal layer 67 is in the voltage-off state, it is information light 81 having substantially the same polarization direction as the incident light 69 that enters the retardation compensation element 56 from the liquid crystal layer 67. Since the information light 81 is polarized in the vertical direction to the transmission axis L4 of the analyzer 68, it cannot pass through the analyzer 68. Accordingly, the liquid crystal display device 51 appears black (hereinafter, dark state) when the pixels are put in the voltage-off state.

On the other hand, when a voltage is applied across the transparent electrodes 78 of the transparent substrates 71, 72, the liquid crystal molecules 75 are tilted in the alignment direction of the alignment films 79. In this state, the polarization direction of the light passing through the liquid crystal layer 67 is changed according to the tilt angle of the liquid crystal molecules 75.

For example, in FIG. 3B where a voltage is applied across the liquid crystal layer 67, most of the liquid crystal molecules 75 are tilted in the alignment direction of the alignment films 79. In this state, the light passing through the liquid crystal layer 67 changes the polarization direction because of the tilted liquid crystal molecules 75, and becomes information light 82 having the light components polarized in both parallel and vertical directions to the incident light 69. This information light 82 is so-called elliptically-polarized light, and contains polarized light components both parallel and vertical to the transmission axis L4 of the analyzer 68. Among these polarized light components, only those parallel to the transmission axis L4 can pass through the analyzer 68. Accordingly, when a voltage is adjusted for each pixel, the amount of light going to enter the analyzer 68 is adjusted and the liquid crystal display device 51 appears gray.

Further, in FIG. 3C where a sufficient amount of voltage is applied across the liquid crystal layer 67, most of the liquid crystal molecules 75 are tilted in the alignment direction of the alignment films 79 so greatly to be substantially parallel to the surface of the liquid crystal display device 51. In this state, the light passing through the liquid crystal layer 67 changes the polarization direction because of the birefringence of the liquid crystal molecules 75 substantially parallel to the surface, and becomes information light 83 whose polarization direction is perpendicular to that of the incident light 69. Since the information light 83 is polarized in the parallel direction to the transmission axis L4 of the analyzer 68, it can pass through the analyzer 68. Accordingly, the liquid crystal display device 51 appears brightest, or red (hereinafter, bright state) when a sufficient amount of voltage is applied to the pixels.

The retardation compensation element 56 is disposed between liquid crystal layer 67 and the analyzer 68, so that it can compensate the phase difference of the information light just out of the liquid crystal layer 67. The retardation compensation element 56 is composed of a negative C-plate 86 and an O-plate 85.

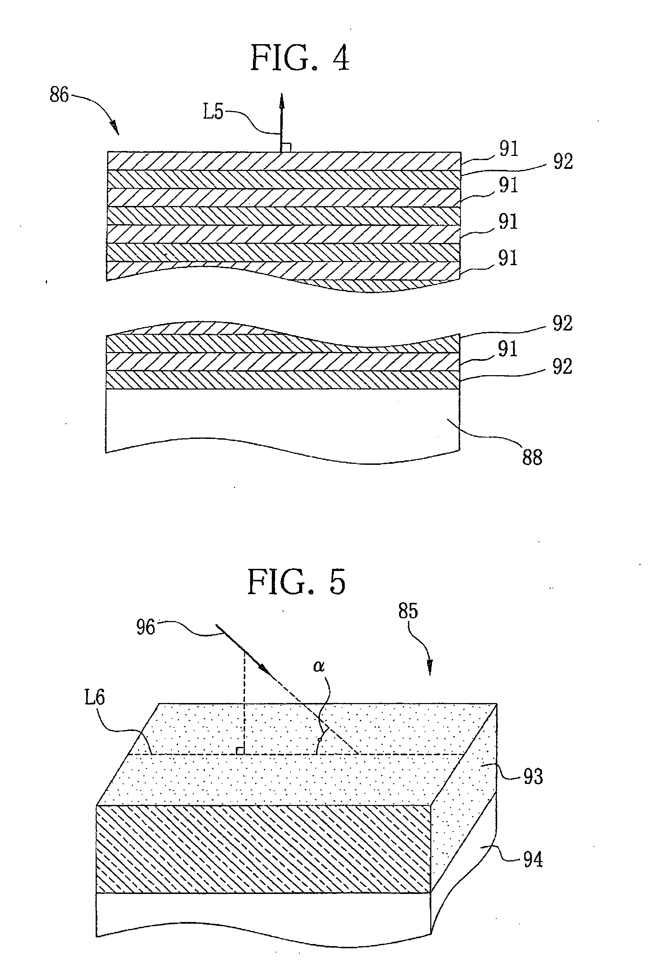

As shown in FIG. 4, the C-plate 86 has an optical axis L5 perpendicular to the surface of the retardation compensation element 56, and compensates the phase difference of obliquely-incident light. The C-plate 86 is alternating stack of high refractive index layers 91 and low refractive index layers 92 on a base material, such as the glass substrate 88.

In this preferred embodiment, the high refractive index layer 91 is made of TiO₂ which is a high refractive index dielectric material, and the low refractive index layer 92 is made of SiO₂ which is a low refractive index dielectric material. To prevent the reflection and interference of light between the layers, each refractive index layer of the C-plate 86 would preferably be thin enough. However, reducing the thickness of each layer will end up increasing the number of the layers to ensure proper function of the C-plate 86, and will lower the manufacturability and the productivity.

It is therefore preferred to control the optical thickness ,i.e., the mathematical product of physical thickness and the refractive index, of each refractive index layers 91, 92 to be enough smaller than the visible light wavelength λ. Specifically, a preferred optical thickness of each layer is not less than λ/100 and not greater than λ/5, and a more preferred optical thickness is not less than λ/50 and not greater than λ/10, and a still more preferred optical thickness is not less than λ/30 and not greater than λ/10.

The high refractive index layer 91 may be made of ZrO₂ or the like, and the low refractive index layer 92 may be made of MgF₂ or the like. Additionally, instead of using the glass substrate 88, the high and low refractive index layers 91, 92 may be stacked directly on the liquid crystal display device 51 or the O-plate 85.

Since it is isotropic to the light parallel to the optical axis L5, i.e., the vertically incident light, the C-plate 86 can not compensate the phase difference of such vertically incident light. However, the C-plate 86 is not isotropic to the obliquely incident light, and induces birefringence. This feature enables the C-plate 86 to compensate the phase difference of the obliquely incident light. Also, the C-plate 86 compensates the phase difference of light caused by the 0-plate 85.

As shown in FIG. 5, the 0-plate 85 is a biaxial birefringent medium, and composed of, for example, an oblique deposition film 93 and a glass substrate 94. Using a so-called oblique deposition method, the oblique deposition film 93 is fabricated by depositing an inorganic material, such as Ta₂O₅, at an angle onto the glass substrate 94 or such a base material. With this manufacturing method, the 0-plate 85 has a grove of columnar structures inclined at a certain angle φ resulted from the deposition angle α in the direction of deposition (deposition direction) 96.

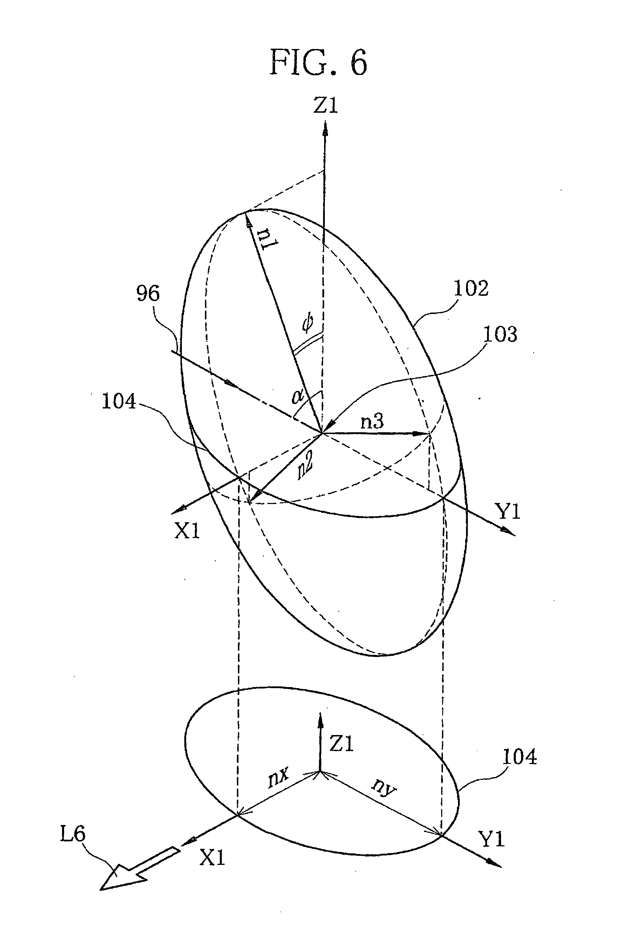

The O-plate 85 is therefore generally a biaxial birefringent medium. Accordingly, as shown in FIG. 6, the birefringence of the light passing through the O-plate 85 is evaluated using an index ellipsoid 102 with semi-axes of three principal refractive indices n1, n2 and n3. For example, mutually orthogonal X1 and Y1 axes are fixed on a plane parallel to the surface of the O-plate 85, and a Z1 axis is fixed along a normal line to the surface of the O-plate 85. The deposition direction 96 is fixed on a X1-Z1 plane, and then the principle refractive index n2 resides on the X1-Z1 plane. In this condition, the largest principal refractive index of the O-plate 85, or n1, generally runs in the different direction from the deposition direction 96 although they reside on the same X1-Z1 plane, and the inclination angle φ between the principal refractive index n1 and the Z1 axis is smaller than the deposition angle α (α > φ).

When the index ellipsoid 102 is cut along a plane being parallel to the surface of the O-plate 85 and passing an origin 103, the cut surface 104 has an oval shape with a radius nx in the X1 axis direction and a radius ny in the Y1 axis direction. Accordingly, the O-plate 85 functions as a birefringent medium, having a refractive index nx in X1 axis direction and a refractive index ny in the Y1 axis direction, to the vertically incident light. Additionally, when the refractive index nx is larger than the refractive index ny (nx > ny), the smallest refractive index to the vertically incident light, i.e., a fast axis L6 runs in the Y1 axis direction. When the refractive index nx is smaller than the refractive index ny (nx < ny), to the contrary, the fast axis L6 runs in the X1 axis direction. In this manner, it is the magnitude relation between the refractive indices nx and ny, namely the relation of each principal refractive indices n1, n2 and n3 to the angle φ that determines whether the fast axis L6 of the 0-plate 85 runs in the X1 axis direction or the Y1 axis direction. Therefore, while the present specification assumes the fast axis L6 to coincide with an orthographic projection of the deposition direction 96 on the 0-plate 85 (i.e., the X1 axis direction), the fast axis L6 does not necessarily run in the X1 axis direction but may run in the Y1 axis direction.

Practically, the direction of each refractive index of the O-plate 85 will vary depending on such manufacturing conditions as degree of vacuum, temperature of substrates, material to deposit and deposition angle, and apparatus used for manufacture, and therefore the property of the O-plate cannot be predicted completely. However, the O-plates of substantially the same nature can be obtained under the same manufacturing conditions and apparatus, and it is even possible to adjust the optical property of the O-plate as desired by controlling these conditions.

Although the 0-plate 85 usually becomes a biaxial birefringent medium when fabricated by the oblique deposition method, in some cases the above mentioned controlling of the manufacturing conditions leads the O-plate 85 to be a so-called uniaxial birefringent medium whose two principal refractive indices, for example, n2 and n3 have the same magnitude (n2=n3). This type of uniaxial birefringent medium can be considered as a particular state of the biaxial birefringent medium, and should be regarded as the uniaxial birefringent O-plate 85.

While the O-plate 85 has the oblique deposition film 93 on the glass substrate 94, the oblique deposition film 93 may be formed directly on the C-plate 86 or the liquid crystal display device 51.

It is to be noted that the retardation compensation elements 57, 58 have the same configuration as the retardation compensation element 56, and the liquid crystal display devices 52, 53 have the same configuration as the liquid crystal display device 51.

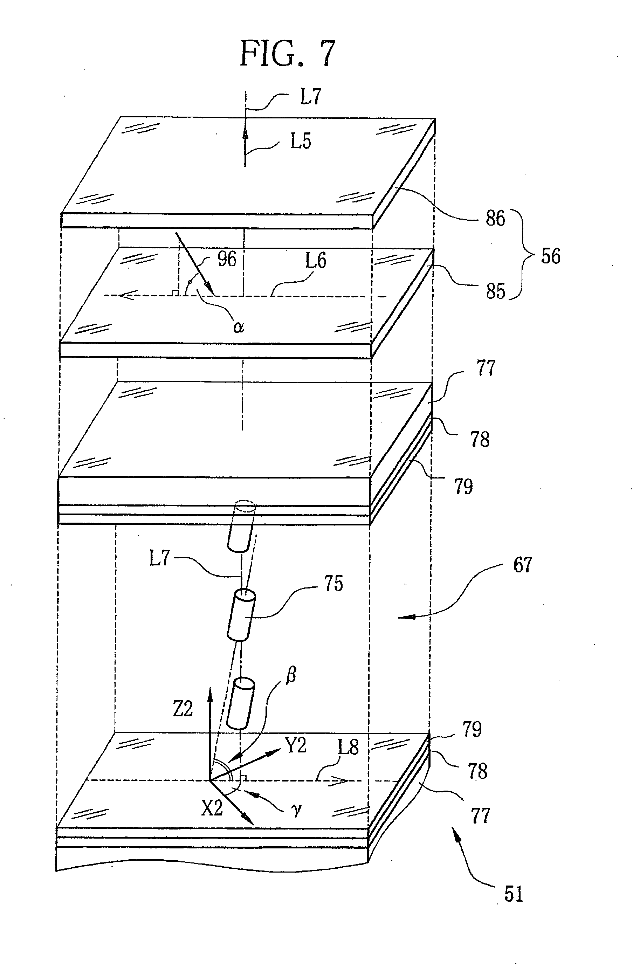

As shown in FIG. 7, the C-plate 86 and the O-plate 85 of the retardation compensation element 56 are located in predetermined positions with respect to the liquid crystal display device 51. More particularly, they are arranged in the order of the liquid crystal layer 67, the O-plate 85, the C-plate 86 and the analyzer 68 from the light source side.

As mentioned above, when no voltage is applied to the pixels of the liquid crystal display device 51, the liquid crystal molecules 75 are aligned substantially vertical to the surface of the liquid crystal display device 51. However, as shown in FIG. 7, the liquid crystal molecules 75 in the voltage-off state are in fact tilted intentionally at 5 degrees from the vertical direction so as not to induce a reverse tilt domain that causes alignment defect.

Mutually orthogonal X2 and Y2 axes are fixed on a plane parallel to the surface of the liquid crystal display device 51, and a Z2 axis is set in the vertical to the liquid crystal display device 51, in other words, parallel to an optical axis (transmission light axis) L7 of the light passing through the liquid crystal layer 67. Additionally, the X2 and Y2 axes are arranged parallel to the transmission axes of the polarizer 66 and the analyzer 68 respectively. Accordingly, as shown in FIG. 7, there is an angle (azimuth angle) γ of 45 degree between the tilt direction of the liquid crystal molecule 75 and the X2 axis, and there is also an angle of 45 degree between the tilt direction of the liquid crystal molecule 75 and the Y2 axis.

In this condition, the liquid crystal molecule 75 forms a tilt angle β to the X2-Y2 plane. The tilt angle β shifts between 0 degree and 85 degrees according to the voltage applied to each pixel. The tilt angle β becomes approximately 0 degree and the liquid crystal molecules 75 are oriented parallel to the X2-Y2 plane when a sufficient amount of voltage is applied across the liquid crystal layer 67. In the voltage-off state, to the contrary, the tilt angle β becomes 85 degree and the liquid crystal molecules 75 are oriented substantially vertical to the X2-Y2 plane. The tilt angle β in this voltage-off state is called a pre-tilt angle, and the liquid crystal molecules 75 are tilted at 5 degrees from the Z2 axis and the transmission light axis L7 in the alignment direction of the alignment film 79.

Practically, when a voltage is applied, the liquid crystal molecules 75 near the alignment films 79 maintain the same posture as in the voltage-off state, while most of the liquid crystal molecules 75 in the center of the liquid crystal layer 67 change the orientation.

In addition, if the liquid crystal molecules 75 are pre-tilted as mentioned above, the birefringence due to the pre-tilt is induces even in the dark state pixels, and a part of the light may pass through the analyzer 68. As a result, complete black color is hardly reproduced and the contrast of a projected image is lowered.

In view of this, the O-plate 85 is arranged such that the fast axis L6 and a tilt direction L8 of the liquid crystal molecule 75 are parallel to each other. When the O-plate 85 is arranged in this manner, the deposition direction 96 will face either the same direction as the pre-tilt of the liquid crystal molecule 75 with respect to the Z2 axis (referred to for convenience as parallel) or the opposite direction to the pre-tilt (referred to for convenience as antiparallel). As shown in FIG. 7, the deposition direction 96 and the pre-tilt should preferably face the opposite direction (antiparallel) with respect to the Z2 axis.

With this arrangement of the 0-plate 85, the phase difference due to the pre-tilt of the liquid crystal molecule 75 occurs in the completely opposite direction to the phase difference caused by the O-plate 85, and the phase difference of light is efficiently compensated by the O-plate 85. It is then possible to minimize the thickness of the O-plate 85 while ensuring the function to compensate the phase difference due to the pre-tilt of the liquid crystal molecule 75. To be exact, the thickness of the O-plate 85 is adjusted such that an absolute value of the phase difference of the light passing through the 0-plate 85 becomes equal to an absolute value of the phase difference due to the pre-tilt of the liquid crystal molecule 75.

In order to compensate the phase difference caused by the pre-tilted liquid crystal molecules 75, it is desirable in principal to arrange the O-plate 85 such that the fast axis L6 becomes antiparallel to the tilt direction L8 on the X2-Y2 plane as mentioned above. However, in reality, the phase difference occurs in the liquid crystal projectors not only because of the pre-tilted liquid crystal molecules 75, but would also because of a tangle of various factors, such as diffraction of light due to the microstructure of the liquid crystal cell, the polarizer 66 and the analyzer 68. Accordingly, it is not necessarily best to orient the fast axis L6 of the O-plate 85 to the direction shown in FIG. 7.

The orientation of the fast axis L6 with respect to the tilt direction L8 of the liquid crystal molecule is therefore adjusted by observing the contrast of a projected image and rotating the O-plate 85 around the Z2 axis, but if the liquid crystal projector has a standard optical system, such as shown in FIG. 2, the best contrast is achieved when the O-plate 85 is rotated either clockwise or counter-clockwise by 45 degrees (±5 degrees) in FIG. 7 to form a 135 degree angle (±10 degrees) to the tilt direction L8. Note in this instance that a preferred rotation direction of the O-plate 85, whether clockwise or counter-clockwise, depends on the configuration of the projector and the properties of the components. As just mentioned, rotating of the O-plate 85 would collectively adjust unfavorable phase differences caused by the optical components and the liquid crystal display device of the liquid crystal projector. This fact provides a very effective and practical measure in the manufacture of the liquid crystal projectors, and even without the C-plate 86, the contrast can be improved to a practically acceptable level only by rotating the 0-plate 85.

Generally, the C-plate 86 is then introduced between the thus arranged O-plate 85 and the analyzer 68, such that the optical axis L5 of the C-plate 86 becomes parallel to the Z2 axis.

Since the absolute values of the two phase differences, the one due to the pre-tilt of the liquid crystal molecule 75 and the other caused when the light passes through the retardation compensation element 56, are opposite in sign to each other, the O-plate 85 can compensate the phase difference caused in the light passing vertically through the liquid crystal layer 67 by the birefringence due to the pre-tilt of the liquid crystal molecule 75. Additionally, the phase difference of the light passing through the 0-plate 85 is compensated by the C-plate 86. In this manner, the phase difference of the vertically incident light on the liquid crystal layer 67 is properly compensated by the O-plate 85 and the C-plate 86, and it is therefore possible to prevent light from passing through the analyzer 68 during the dark state.

On the other hand, the phase difference of the light passing obliquely through the liquid crystal layer 67 is compensated by both the O-plate 85 and the C-plate 86. The C-plate 86 also compensates the phase difference of the light passing obliquely through the 0-plate 85. In other words, the light passing obliquely through the liquid crystal layer 67 becomes to have a phase difference because of the birefringence due to the pre-tilt angle β of the liquid crystal molecule 75, This phase difference, however, is properly compensated by the O-plate 85 and the C-plate 86. It is therefore possible to prevent light from passing through the analyzer 68 during the dark state.

In this manner, the retardation compensation element 56 compensates the phase difference due to the pre-tilt of the liquid crystal molecules 75, as well as the phase difference of the light passing obliquely through the liquid crystal layer 67.

Next, with reference to Example 1, the operation of the retardation compensation element 56 is explained. Hereafter, the phase difference is substituted for retardation, the equivalent word, because the phase difference depends on the wavelength and other properties of the light passing through the liquid crystal display device and the retardation compensation element. The retardation, dΔn, is expressed by an equation of dΔn = d· (nx - ny), wherein d represents the physical thickness of the retardation compensation element, nx represents the largest principal refractive index on the element's surface, and ny represents the smallest principal refractive index on the element' s surface. Additionally, retardation Rth in the thickness direction of the liquid crystal layer and the C-plate is expressed by an equation of Rth = d· {nz -(nx + ny)/2}.

### [Example 1]

A liquid crystal display device was prepared to have retardation Rth (in the thickness direction of the liquid crystal layer) of +400nm and the liquid crystal molecules with a pre-tilt angle of 85 degrees. A retardation compensation element was then prepared from an O-plate with retardation of +8nm and an inclination angle φ of the largest principal refractive index n1 of 20.5 degrees, and a C-plate with retardation Rth in the thickness direction of -400nm. These liquid crystal display device and retardation compensation element were combined to compose a projector, and a conoscopic figure of the liquid crystal display device was measured to evaluate the contrast of the liquid crystal display device and the projector. The conoscopic figure was measured within the ranges of -30 ≤ θ ≤ +30 and 0 ≤ φ ≤ 360 around a central point on a normal line to the liquid crystal display device, wherein φ represents an angle of rotation around the central point and θ represents an angle of measurement between the normal line intersecting at the central point.

The O-plate in Example 1 was made by obliquely depositing Ta₂O₅ at the deposition angle α of 45 degrees, and had the largest principle refractive index n1 of 1.800, the principle refractive index n2 of 1.784, the principle refractive index n3 of 1.742 and the inclination angle φ of the principle refractive index n1 of 20.5 degrees. Consequently, the refractive index nx was smaller than the refractive index ny (nx < ny), and the fast axis L6 of the O-plate coincided with an orthographic projection of the deposition direction onto the O-plate.

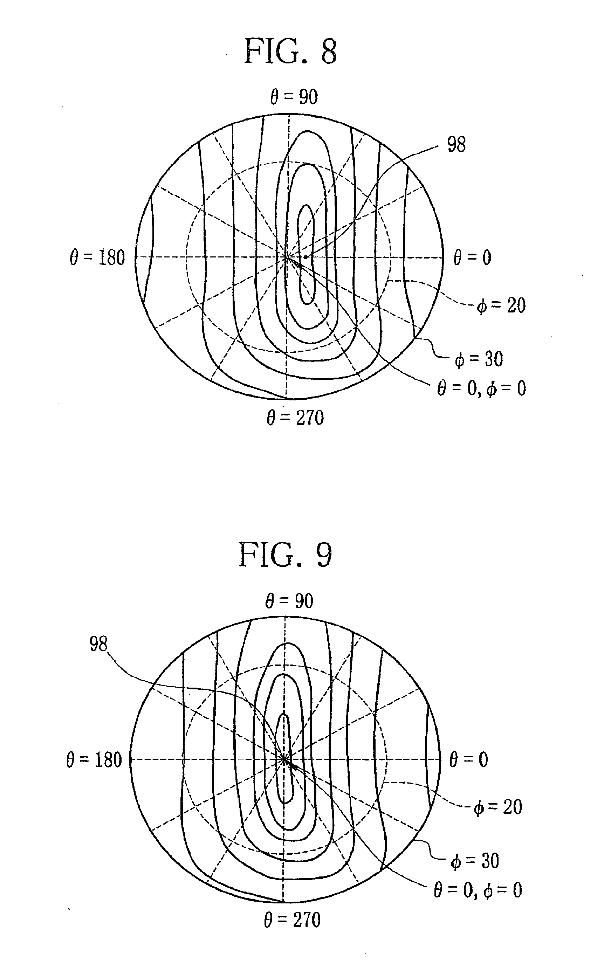

As shown in the conoscopic figure of FIG. 8 where only the C-plate was used as the retardation compensation element, a transmission light amount was lowest and the best contrast point (hereinafter, a darkest point) 98 was not on the normal line (θ = 0) to the liquid crystal display device. This resulted from the presence of the light that uncontrollably passes through the analyzer because of the birefringence, due to the pre-tilt of the liquid crystal molecules.

By comparison, as shown in the conoscopic figure of FIG. 9 where both the C-plate and the O-plate were used as the retardation compensation element, the darkest point 98 was on the normal line (θ = 0) to the liquid crystal display device. This means that the phase difference caused by the birefringence due to the pre-tilt of the liquid crystal molecules had been compensated by the 0-plate.

Next, to evaluate the effect of the retardation compensation element, a projector with a 1100:1 contrast ratio was prepared and combined with the retardation compensation element. With only the C-plate, the contrast ratio of the projector was increased to 1600:1. With retardation compensation element composed of the C-plate and the 0-plate, the contrast ratio of the projector was increased to 2400:1. These results indicates that the projector, when combined with the retardation compensation element of the present invention, had improved the contrast ratio sufficiently over a wide viewing angle.

While the above first embodiment utilizes the birefringence property of the O-plate, and the retardation compensation element introduced to a VAN-LCD includes a single O-plate, the retardation compensation element may have several 0-plates as shown in a second embodiment below.

### [Second Embodiment]

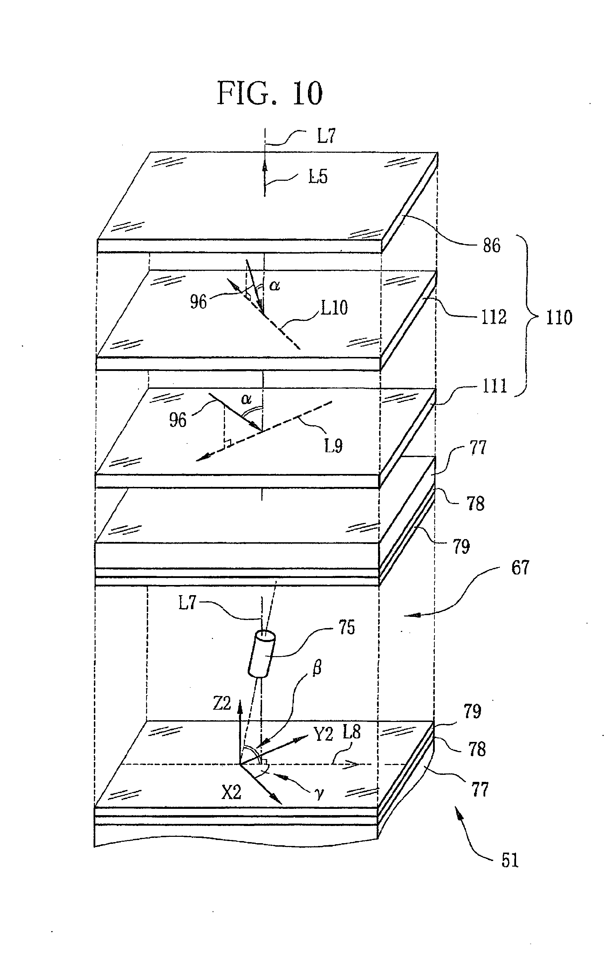

Referring to FIG. 10, a retardation compensation element 110 includes a first O-plate 111, a second O-plate 112 and the C-plate 86. The first and the second O-plates 111, 112 are fabricated in the same manner and have the same optical property as the O-plate 85 of the first embodiment, and thus the same elements are designated by the same reference numerals as the O-plate 85. Also, the same liquid crystal display device is used in this embodiment, and thus the same components as the first embodiment are designated by the same reference numerals.

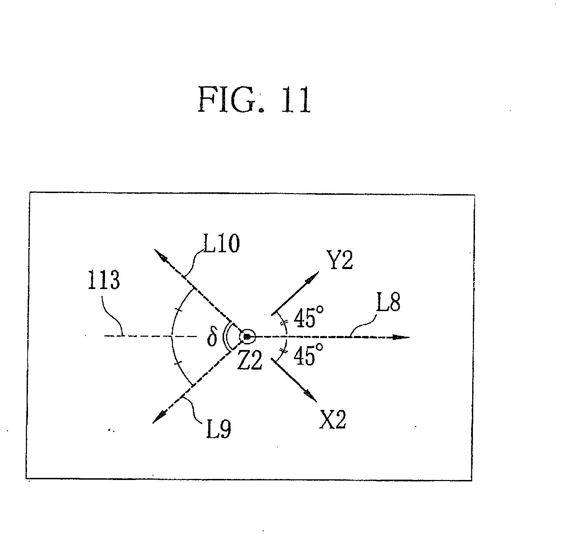

The retardation compensation element 110 is different from the retardation compensation element 56 in the arrangement of the O-plate with respect to the liquid crystal layer. Specifically, as shown in FIG. 10 and FIG. 11, the first and the second O-plates 111, 112 are arranged to form an angle δ of substantially 90 degrees between a fast axis L9 of the first O-plate 111 and a fast axis L10 of the second O-plate 112. Additionally, the two O-plates 111, 112 are arranged such that a center line 113 bisecting the angle δ and the tilt direction L8 of the liquid crystal molecules 75 are collinear, but in the opposite direction to each other. With this arrangement, the retardation compensation element 110 further improves the contrast of the liquid crystal display device. The operation of the retardation compensation element 110 is now described with reference to Example 2 below.

### [Example 2]

A liquid crystal display device was prepared to have retardation Rth (in the thickness direction of the liquid crystal layer) of +400nm and the liquid crystal molecules with a pre-tilt angle of 85 degrees. A retardation compensation element was then prepared from a first and a second O-plates each with retardation of +30nm and an inclination angle φ of the largest principal refractive index n1 of 20 degrees, and a C-plate with retardation Rth in the thickness direction of -300nm. These liquid crystal display device and retardation compensation element were combined to compose a projector, and a conoscopic figure of the liquid crystal display device was measured to evaluate contrast of the liquid crystal display device and the projector. The first and the second 0-plates were arranged to form the angle δ of 86 degrees between their fast axes. The conoscopic figure showed the same feature as in Example 1.

First of all, the contrast ratio of the projector itself, without the retardation compensation element, was measured and the result was 1100:1. The retardation compensation element was then introduced, and the contrast ratio of the projector was enormously increased to 4500:1. This result indicates that the first and the second O-plates arranged with their fast axes perpendicular to each other functioned as a obliquely disposed negative C-plate, or in other words, a negative 0-plate. This result also indicates that a negative O-plate is easily obtained by fabricating two O-plates of an organic material by the oblique deposition method and arranging these 0-plates with their fast axes perpendicular to each other.

While the angle δ, between the fast axes L9 and L10 of the O-plates, can be in the range between 0 to 180 degrees, it may preferably be in the range between more than 60 degrees and less than 120 degrees, and more preferably in the range between more than 70 degrees and less than 110 degrees, and still more preferably in the range between more than 80 degrees and less than 110 degrees.

### [Example 3]

The same liquid crystal display device as in Example 2 was prepared, and a retardation compensation element was prepared from a first O-plate with retardation of +30nm and an inclination angle φ of the largest principal refractive index n1 of 20 degrees, a second 0-plate with retardation of +37nm and an inclination angle φ of the largest principal refractive index n1 of 20 degrees, and a C-plate with retardation Rth in the thickness direction of -400nm. These liquid crystal display device and retardation compensation element were combined to compose a projector, and a conoscopic figure of the liquid crystal display device was measured to evaluate contrast of the liquid crystal display device and the projector. The first and the second O-plates were arranged in the same manner as in Example 2, and the conoscopic figure showed the same feature as in Example 1.

First of all, the contrast ratio of the projector itself, without the retardation compensation element, was measured and the result was 1100:1. The retardation compensation element was then introduced, and the contrast ratio of the projector was increased. Especially, when the retardation compensation element was rotated horizontally to the surface of the liquid crystal display device within a ± 5-degree range from the tilt direction of the liquid crystal molecule 75, the contrast ratio was changing between 1500:1 and 4000:1. This was because that phase difference of the light going to enter the analyzer had been adjusted by excessive retardation (7nm) between the first and the second O-plates when the retardation compensation element was rotated.

It is therefore possible to control the contrast of the liquid crystal display device by using the retardation compensation element with two or more 0-plates of different retardation and adjusting the angle thereof to the liquid crystal display device. To achieve extremely high contrast, the difference in retardation between the first and the second O-plates is preferably not less than 0nm and not more than 20nm, and more preferably not less than 2nm and not more than 15nm, and still more preferably not less than 3nm and not more than 12nm. The contrast adjustment by rotation of the retardation compensation element is suitable for balancing the contrast between colors in a projector having separate liquid crystal display devices for red, green and blue colors.

When the retardation compensation element has two or more O-plate, rotating one or some O-plates is also an effective measure to compensate the phase differences caused by the optical components and the liquid crystal display device of the liquid crystal projector. This rotating-adjustment, when performed while the contrast of the image is observed in the final stage of the liquid crystal projector manufacturing process, can eliminate a difficult task to separately analyze the cause of each unfavorable phase difference and take measures to it.

As described above, the retardation compensation element according to the present invention can properly compensate the phase difference due to the pre-tilt of the liquid crystal molecules of the VAN-LCD, and improves the contrast. Additionally, the retardation compensation element composed of the C-plate and the birefringent O-plate compensates the phase difference of the light passing obliquely through the VAN-LCD, and improves the viewing angle.

Furthermore, in the present invention, the use of the birefringent O-plate fabricated by the oblique deposition method allows to easily and inexpensively manufacture the retardation compensation element, which otherwise requires such cumbersome process as layering many retardation films or stretching a polymer film in several different directions, as well as expensive equipment.

While the second embodiment is described with the retardation compensation element having two O-plates, three or more O-plates may be used in the retardation compensation element. In this case, each O-plate should be arranged in the same manner as in the first and the second embodiments.

While the above embodiments are described with the projector having a transmissive VAN-LCD, the retardation compensation element of the present invention is applicable to reflective VAN-LCDs.

Furthermore, the retardation compensation element of the present invention is applicable not only to the liquid crystal projectors but also to direct-view type liquid crystal panels of which the liquid crystal device is viewed directly.

While the VAN-LCD in the above embodiments is a single-domain type whose liquid crystal molecules are all oriented in the same alignment direction, the retardation compensation element of the present invention is applicable to a multi-domain type VAN-LCD whose pixels are grouped into domains of different alignment directions.

In the above embodiments, the C-plate is alternating stack of layers with different refractive indices. However, the C-plate may be a stretched film of triacetyl cellulose (TAC). As well as the TAC film, the C-plate may be fabricated from, for example, a polycarbonate film, a polyvinyl alcohol film, a polysulfone film, a polyolefin film and a polyarylate film.

While it is disposed between the crystal layer and the analyzer in the above embodiments, the retardation compensation element may be disposed between the liquid crystal layer and the polarizer. It is preferred in this case to foresee the phase difference in the liquid crystal layer and to give a counterbalancing phase difference to incident light previously.

While they are integrated in the embodiments, the O-plate 85 and the C-plate may be disposed away from each other across the liquid crystal display device 51.

In the above embodiments, the liquid crystal projector has three liquid crystal display devices for R, G and B colors. The projector, however, may have a single liquid crystal display device to switch over R, G, and B images rapidly, and a full-color projection image is produced by casting R, G and B light selectively on this liquid crystal display device.

While the above embodiments do not illustrate typical function adding layers, such as an anti-reflection layer and an anti-glare layer, it is preferred to use these function adding layers as usual along with the phase difference compensation layer.

## Claims

1. A system comprising a retardation compensation element (56, 57, 58, 110) combined with a vertical alignment nematic (VAN) liquid crystal cell in which liquid crystal molecules (75) are aligned to have a pre-tilt angle of between 3 and 10 degrees to the normal to a cell substrate when no voltage is applied, for compensating a phase difference of light passing through a liquid crystal layer (67) of said vertical alignment nematic (VAN) liquid crystal cell, said retardation compensation element (56, 57, 58, 110) comprising:
a biaxial birefringent medium (85, 111, 112) which is made by oblique deposition of an inorganic material and has both an optical axis inclined to a surface of said vertical alignment nematic (VAN) liquid crystal cell and a fast axis (L6, L9, L10) which coincides with an orthographic projection of a deposition direction (96) of said inorganic material onto said surface, said biaxial birefringent medium (85, 111, 112) having the angle of the fast axis to a pre-tilt direction (L8) in the plane of the substrate of the liquid crystal molecules selected to be between 125 degrees and 145 degrees.

2. The system of claim 1, wherein said retardation compensation element (56, 57, 58, 110) is arranged such that said fast axis (L6, L9, L10) of said biaxial birefringent medium (85, 111, 112) forms an angle of substantially 135 degrees to the pre-tilt direction of said liquid crystal molecules (75).

3. The system of claim 1, further comprising:
a uniaxial birefringent medium (86) combined with said biaxial birefringent medium (85, 111, 112) and having an optical axis perpendicular to said surface of said vertical alignment nematic (VAN) liquid crystal cell, said uniaxial birefringent medium (86) compensating a phase difference of light passing obliquely through the liquid crystal layer (67) and a phase difference of light passing through said biaxial birefringent medium (85, 111, 112).

4. The system of claim 3, wherein said uniaxial birefringent medium (86) is an alternate stack of high refractive index and low refractive index inorganic layers (91, 92).

5. The system of claim 1, wherein two of said biaxial birefringent media (111, 112) are layered such that said fast axes (L9, L10) form an approximately 90-degree angle and that a center line bisecting said 90-degree angle coincides with said orthographic projection of said deposition direction (96), said two biaxial birefringent media (111, 112) compensating phase differences of light passing obliquely and vertically through said liquid crystal layer (67).

6. A vertical alignment nematic (VAN) liquid crystal display device (51, 52, 53) comprising the system of any one of claims 1 to 5.

7. A liquid crystal projector (10) arranged to enlarge and project an image displayed in a vertical alignment nematic (VAN) liquid crystal display device (51, 52, 53) according to claim 6, the projector comprising the said display device.

8. The liquid crystal projector of claim 7, wherein said retardation compensation element (56, 57, 58, 110) is arranged such that said fast axis (L6, L9, L10) of said biaxial birefringent medium (85, 111, 112) forms an angle of substantially 135 degrees to a pre-tilt direction of said liquid crystal molecules (75).

## Patentansprüche

1. System, das ein Verzögerungskompensationselement (56, 57, 58, 110) kombiniert mit einer nematischen Vertikal-Ausrichtungs- (VAN) Flüssigkristallzelle, in der Flüssigkristallmoleküle (57) ausgerichtet sind, einen Vorkippwinkel zwischen 3 und 10 Grad gegenüber der Normalen zu einem Zellsubstrat aufzuweisen, wenn keine Spannung angelegt ist, umfasst, zum Kompensieren einer Phasendifferenz von Licht, das eine Flüssigkristallschicht (67) der nematischen Vertikal-Ausrichtungs- (VAN)-Flüssigkristallzelle passiert, wobei das Rückhaltungskompensationselement (56, 57, 58, 110) umfasst:
ein biaxiales doppelbrechendes Medium (85, 111, 112), das durch geneigte Ablagerung eines anorganischen Materials gemacht ist, und sowohl eine optische Achse, die zu einer Oberfläche der nematischen Vertikal-Ausrichtungs- (VAN)-Flüssigkristallzelle geneigt ist, als auch eine schnelle Achse (L6, L9, L10) aufweist, welche mit einer orthografischen Projektion auf eine Ablagerungsrichtung (96) des anorganischen Materials auf die Oberfläche koinzidiert,
wobei das biaxiale Doppelbrechungsmedium (85, 111, 112) den Winkel der schnellen Achse zu einer vorgekippten Richtung (L8) in der Ebene des Substrats der Flüssigkristallmodelle aufweist, welche ausgewählt ist, zwischen 125 Grad und 145 Grad zu sein.

2. System nach Anspruch 1, wobei das Verzögerungskompensationselement (56, 57, 58, 110) so angeordnet ist, dass die schnelle Achse (L6, L9, L10) des biaxialen Doppelbrechungsmedium (85, 111, 112) einen Winkel von im Wesentlichen 135 Grad zu der vorgekippten Richtung der Flüssigkristallmoleküle (75) bildet.

3. System nach Anspruch 1, weiter umfassend:
ein einaxiales Doppelbrechungsmedium (86), das mit dem biaxialen Doppelbrechungsmedium (85, 110, 112) kombiniert wird, und eine optische Achse rechtwinklig zur Oberfläche der nematischen Vertikal-Ausrichtungs- (VAN)-Flüssigkristallzelle aufweist, wobei das einaxiale Doppelbrechungsmedium (86) eine Phasendifferenz von Licht kompensiert, das die Flüssigkristallschicht (67) geneigt passiert, und eine Phasendifferenz von Licht, welches das biaxiale Doppelbrechungsmedium (85, 111, 112) passiert.

4. System nach Anspruch 3, wobei das einaxiale Doppelbrechungsmedium (86) ein abwechselnder Stapel von Schichten hohen Brechungsindex und niedrigen Brechungsindex (91, 92) ist.

5. System nach Anspruch 1, wobei zwei der biaxialen Doppelbrechungsmedien (111, 112) so geschichtet sind, dass die schnellen Achsen (L9, L10) einen ungefähren 90° Winkel bilden und dass eine Zentrallinie, die den 90° Winkel halbiert, mit der orthografischen Projektion der Ablagerungsrichtung (96) koinzidiert, wobei die zwei biaxialen Doppelbrechungsmedien (111, 112) Phasendifferenzen von Licht kompensieren, das die Flüssigkristallschicht (67) geneigt und vertikal passiert.

6. Nematische Vertikal-Ausrichtungs- (VAN)-Flüssigkristallanzeigevorrichtung (51, 52, 53), die das System eines der Ansprüche 1 bis 5 umfasst.

7. Flüssigkristallprojektor 10, der ausgelegt ist, ein in einer nematischen Vertikalausrichtungs- (VAN)-Flüssigkristallanzeigevorrichtung (51, 52, 53) gemäß Anspruch 6 angezeigtes Bild zu vergrößern und zu projizieren, wobei der Projektor die Anzeigevorrichtung umfasst.

8. Flüssigkristallprojektor nach Anspruch 7, wobei das Rückhaltungskompensationselement (56, 57, 58, 110) so ausgelegt ist, dass die schnelle Achse (L6, L9, L10) des biaxialen Doppelbrechungsmediums (85, 111, 112) einen Winkel von im Wesentlichen 135 Grad zu einer vorgekippten Richtung der Flüssigkristallmoleküle (75) bildet.

## Revendications

1. Système comprenant un élément de compensation de retard (56, 57, 58, 110) combiné avec une cellule à cristaux liquides nématiques à alignement vertical (VAN) dans laquelle des molécules de cristaux liquides (75) sont alignées pour avoir un angle de pré-inclinaison compris entre 3 et 10 degrés par rapport à la normale à un substrat de cellule lorsqu'aucune tension n'est appliquée, pour compenser une différence de phase d'une lumière passant à travers une couche de cristaux liquides (67) de ladite cellule à cristaux liquides nématiques à alignement vertical (VAN), ledit élément de compensation de retard (56, 57, 58, 110) comprenant :
un milieu biréfringent biaxial (85, 111, 112) qui est réalisé par dépôt oblique d'un matériau inorganique et a à la fois un axe optique incliné par rapport à une surface de ladite cellule à cristaux liquides nématiques à alignement vertical (VAN) et un axe rapide (L6, L9 , L10) qui coïncide avec une projection orthographique d'une direction de dépôt (96) dudit matériau inorganique sur ladite surface, ledit milieu biréfringent biaxial (85, 111, 112) ayant l'angle de l'axe rapide par rapport à une direction de pré-inclinaison (L8) dans le plan du substrat des molécules de cristaux liquides choisi pour être compris entre 125 degrés et 145 degrés.

2. Système de la revendication 1, dans lequel ledit élément de compensation de retard (56, 57, 58, 110) est agencé de sorte que ledit axe rapide (L6, L9, L10) dudit milieu biréfringent biaxial (85, 111, 112) forme un angle substantiellement égal à 135 degrés par rapport à la direction de pré-inclinaison desdites molécules de cristaux liquides (75).

3. Système de la revendication 1, comprenant en outre :
un milieu biréfringent uniaxial (86) combiné avec ledit milieu biréfringent biaxial (85, 111, 112) et ayant un axe optique perpendiculaire à ladite surface de ladite cellule à cristaux liquides nématiques à alignement vertical (VAN), ledit milieu biréfringent uniaxial (86) compensant un différence de phase d'une lumière passant obliquement à travers la couche de cristaux liquides (67) et une différence de phase d'une lumière passant à travers ledit milieu biréfringent biaxial (85, 111, 112).

4. Système de la revendication 3, dans lequel ledit milieu biréfringent uniaxial (86) est un empilement alterné de couches inorganiques (91, 92) à indice de réfraction élevé et à faible indice de réfraction.

5. Système de la revendication 1, dans lequel deux milieux desdits milieux biréfringents biaxiaux (111, 112) sont disposés en couches de sorte que lesdits axes rapides (L9, L10) forment un angle d'environ 90 degrés, et qu'une ligne centrale bissectrice dudit angle de 90 degrés coïncide avec ladite projection orthographique de ladite direction de dépôt (96), lesdits deux milieux biréfringents biaxiaux (111, 112) compensant des différences de phase d'une lumière passant obliquement et verticalement à travers ladite couche de cristaux liquides (67).

6. Dispositif d'affichage (51, 52, 53) à cristaux liquides nématiques à alignement vertical (VAN) comprenant le système de l'une quelconque des revendications 1 à 5.

7. Projecteur à cristaux liquides (10) agencé pour agrandir et projeter une image affichée dans un dispositif d'affichage (51, 52, 53) à cristaux liquides nématiques à alignement vertical (VAN) selon la revendication 6, le projecteur comprenant ledit dispositif d'affichage.

8. Projecteur à cristaux liquides de la revendication 7, dans lequel ledit élément de compensation de retard (56, 57, 58, 110) est agencé de sorte que ledit axe rapide (L6, L9, L10) dudit milieu biréfringent biaxial (85, 111, 112) forme un angle substantiellement égal à 135 degrés par rapport à une direction de pré-inclinaison desdites molécules de cristaux liquides (75).
